# EUROPÄISCHE PATENTANMELDUNG

(11) **EP 3 825 108 A1**
(43) Veröffentlichungstag der Anmeldung: **26.05.2021**
(21) Anmeldenummer: 19210442.0
(22) Anmeldetag: 20.11.2019
(51) Int. Cl.: B29C 71/00, C08J 7/02, B29C 64/188, B29C 64/35, B33Y 40/00

(54) **VERFAHREN ZUR BEHANDLUNG EINES FORMARTIKELS AUS KUNSTSTOFF**

(71) Anmelder: WashTec Holding GmbH, 86153 Augsburg (DE)
(72) Erfinder: SATTLER, Andreas, 81543 München (DE)
(74) Vertreter: Winter, Brandl - Partnerschaft mbB

(57) **Zusammenfassung**

Es wird ein Verfahren zur Behandlung eines Formartikels aus Kunststoff, insbesondere ein Nachbehandlungsverfahren für Kunststoffformartikel aus additiver Fertigung beschrieben. Das erfindungsgemäße Verfahren umfasst die Schritte
a) Erzeugen einer Dampfphase durch Erwärmen einer Behandlungsflüssigkeit bis zu deren Siedepunkt, wobei die Behandlungsflüssigkeit mindestens ein Lösungsmittel umfasst, das in der Lage ist, den Kunststoff zu lösen oder anzulösen,
b) Aussetzen des zu behandelnden Formartikels der im Schritt a) erzeugten Dampfphase für eine vorgegebene Behandlungszeit und
c) Entfernen des Formartikels aus der Dampfphase und Entfernen von auf der Oberfläche des behandelten Formartikels vorhandener restlicher Behandlungsflüssigkeit.

## Beschreibung

### Technisches Gebiet

Die vorliegende Offenbarung betrifft ein Verfahren zur Behandlung eines Formartikels aus Kunststoff, insbesondere ein Nachbehandlungsverfahren für Kunststoffformartikel aus additiver Fertigung.

Bei der additiven Fertigung wird ein dreidimensionaler Formartikel Schicht für Schicht aus einem Werkstoff aufgebaut, so dass damit auch komplexe Geometrien erzeugt werden können. Bei diesem oft auch als 3D-Druck bezeichneten Fertigungsverfahren wird die gewünschte Geometrie durch schichtweises Hinzufügen, Auftragen und Ablagern von Material gebildet, wobei physikalische oder chemische Härtungs- oder Schmelzprozesse zum Einsatz kommen. Typische Werkstoffe sind beispielsweise Kunststoffe, Keramiken und Metalle.

Die Oberfläche eines auf diese Weise hergestellten Formartikels ist oft relativ rau und ist in der Regel die fertigungsbedingte Schichtstruktur zu erkennen. Wenn eine hohe Oberflächengüte gewünscht ist, um entweder optischen oder funktionalen Anforderungen zu genügen, ist es daher notwendig, die Oberfläche durch eine Nachbearbeitung zu glätten. Meist wird ein mechanisches Nacharbeiten, wie beispielsweise Schleifen, oder ein Lackieren oder eine Kombination von beidem angewendet. Bei einzelnen Polymeren (z.B. ABS) ist auch die Anwendung von Lösungsmitteln bekannt, wobei dabei in der Regel handwerkliche Prozesse mit minimaler Prozesskontrolle und sehr langen Prozesszeiten angewendet werden. So wird das Lösungsmittel entweder auf den zu bearbeitenden Formartikel mittels eines Pinsels aufgetragen oder wird der Formartikel kurzzeitig in das Lösungsmittel eingetaucht. Allerdings ist insbesondere bei komplexen Geometrien und Konturen eine Oberflächenglättung schwierig, da nicht alle Oberflächenpartien gleich gut zugänglich sind.

Bei mittels additiver Fertigung hergestellten Formartikeln aus ABS-Kunststoff, d.h. einem Acrylnitril-Butadien-Styrol-Copolymer, wird zudem ein Verfahren angewendet, bei dem der Formartikel für eine vorgegebene Zeitdauer zusammen mit Aceton in einem abgeschlossenen Raum aufbewahrt wird, ohne dass Aceton und Formartikel in direktem Kontakt miteinander stehen. Aceton ist in der Lage, den ABS-Kunststoff zu lösen oder anzulösen. Aufgrund seiner hohen Flüchtigkeit bereitet sich Aceton auch ohne ein zusätzliches Erwärmen in dem abgeschlossenen Raum aus, kommt dabei mit der Oberfläche des Formartikels in Kontakt und löst den Werkstoff an wodurch die Oberfläche des Formartikels geglättet wird.

Bei den oben beschriebenen Verfahren zur Glättung der Oberfläche ist jedoch die Prozesskontrolle unzureichend, so dass es schwierig ist reproduzierbare Ergebnisse sicherzustellen. Zudem sind in der Regel die Behandlungszeiten zu lange als dass damit deren Einsatz in der industriellen Produktion sinnvoll erscheint. Auch erlauben die bisher bekannten Verfahren der Anwendung von Lösungsmitteldämpfen lediglich die Bearbeitung weniger Werkstoffe.

Aufgabe der vorliegenden Erfindung war es daher, ein Verfahren zur Behandlung eines Formartikels aus Kunststoff bereitzustellen, das eine hohe Genauigkeit und Reproduzierbarkeit sicherstellt, kurze Prozesszeiten ermöglicht und zudem so angepasst werden kann, dass eine möglichst große Anzahl verschiedener Werkstoffe bearbeitet werden kann.

Diese Aufgabe wurde gelöst mittels des erfindungsgemäßen Verfahrens zur Behandlung eines Formartikels aus Kunststoff gemäß Anspruch 1, das die folgenden Schritte umfasst:
a) Erzeugen einer Dampfphase durch Erwärmen einer Behandlungsflüssigkeit bis zu deren Siedepunkt, wobei die Behandlungsflüssigkeit mindestens ein Lösungsmittel umfasst, das in der Lage ist, den Kunststoff zu lösen oder anzulösen,
b) Aussetzen des zu behandelnden Formartikels der im Schritt a) erzeugten Dampfphase für eine vorgegebene Behandlungszeit und
c) Entfernen des Formartikels aus der Dampfphase und Entfernen von auf der Oberfläche des behandelten Formartikels vorhandener restlicher Behandlungsflüssigkeit.

Dadurch, dass in dem erfindungsgemäßen Verfahren die verwendete Behandlungsflüssigkeit bis zu deren Siedepunkt erwärmt wird, wird zum einen eine größere Menge an Lösungsmittel in die Dampfphase überführt und wird zum anderen eine hinsichtlich Temperatur und Zusammensetzung gleichbleibende und reproduzierbare Dampfphase erzeugt. Dies ermöglicht kürzere Behandlungszeiten und reproduzierbarere Ergebnisse. Ferner können damit auch Lösungsmittel eingesetzt werden, die aufgrund ihrer bei Raumtemperatur geringen Flüchtigkeit ansonsten als ungeeignet erscheinen. Durch geeignete Wahl der Behandlungszeit kann das Ausmaß von beispielsweise einer Glättung der Oberfläche gezielt gesteuert werden. Darauf basierend können reproduzierbare Ergebnisse realisiert werden, was das erfindungsgemäße Verfahren auch für den industriellen Einsatz geeignet macht.

Das Erzeugen der Dampfphase im Schritt a) bedeutet, dass durch das Erwärmen der Behandlungsflüssigkeit diese in einem Maße verdampft, dass eine Atmosphäre oder ein Gasraum entsteht, der hauptsächlich aus dampfförmiger, d.h. gasförmiger, Behandlungsflüssigkeit besteht.

Das Aussetzen des zu behandelnden Formartikels der im Schritt a) erzeugten Dampfphase bedeutet, dass der Formartikel dabei entweder vollständig von der erzeugten Dampfphase umgeben ist oder dass lediglich ein definierter Teil des Formartikels der Dampfphase ausgesetzt wird, d.h. mit ihr in Kontakt kommt. Dabei kann entweder der Formartikel in die erzeugte Dampfphase eingebracht werden oder kann die erzeugte Dampfphase dem Formartikel zugeführt werden.

Lösungsmittel im Sinne der vorliegenden Anmeldung sind alle Flüssigkeiten, die in der Lage sind, den Kunststoff, aus dem der zu behandelnde Formartikel hergestellt ist, zu lösen oder anzulösen, ohne dass es dabei zu chemischen Reaktionen zwischen Lösungsmittel und Kunststoff kommt. Dazu gehören beispielsweise organische Lösungsmittel, wie aliphatische Kohlenwasserstoffe, aromatische Kohlenwasserstoffe, Ketone und Ester, die substituiert oder nicht substituiert sein können, sowie anorganische und organische Säuren und deren wässrige Lösungen, wie beispielsweise Ameisensäure oder Essigsäure.

Der Kunststoff, aus dem der zu behandelnde Formartikel hergestellt ist, ist lediglich dadurch beschränkt, dass eine Behandlungsflüssigkeit zugänglich ist, die diesen Kunststoff lösen oder anlösen kann, insbesondere bei einer Temperatur im Bereich des Siedepunkts der Behandlungsflüssigkeit.

Der Kunststoff ist vorzugsweise ein thermoplastischer Kunststoff. Im Speziellen kann der zu behandelnde Formartikel aus einem Kunststoff hergestellt sein, der ausgewählt ist aus thermoplastischen Kunststoffen, wie Acrylnitril-Butadien-Styrol-Copolymer (ABS), Polypropylen (PP), Polycarbonat (PC), Polylactid (PLA), Polyamid (PA), Polyethylenterephthalat (PET) und Polystyrol (PS).

Geeignete Kombinationen aus Kunststoff und Lösungsmittel sind beispielsweise:
ABS + Keton (bspw. Aceton, Methylethylketon (MEK), Methylisobutylketon (MIBK)),
PP + Aliphaten oder Aromaten (Bspw. Benzol, Toluol, Xylol),
PC + Keton (bspw. Aceton, Methylethylketon (MEK), Methylisobutylketon (MIBK)),
PLA + Tetrahydrofuran (THF) oder Dioxan, und
Polyamid 6 (PA6) + Ameisensäure oder Essigsäure.

Die bei dem erfindungsgemäßen Verfahren verwendete Behandlungsflüssigkeit kann aus lediglich einem einzelnen Lösungsmittel bestehen. Alternativ kann die Behandlungsflüssigkeit eine Mischung aus zwei oder mehr Lösungsmitteln sein oder kann eine Mischung sein, die neben dem mindestens einen Lösungsmittel eine weitere Flüssigkeit umfasst, wobei die weitere Flüssigkeit den Kunststoff nicht lösen oder anlösen kann.

Gemäß einer speziellen Ausführungsform umfasst die Behandlungsflüssigkeit zusätzlich zu dem mindestens einen Lösungsmittel mindestens ein weiteres Lösungsmittel und/oder eine andere Flüssigkeit und bildet die Behandlungsflüssigkeit ein azeotropes Gemisch.

Ein azeotropes Gemisch, auch Azeotrop genannt, ist eine aus zwei oder mehr chemischen Verbindungen bestehende Flüssigkeit, deren Gleichgewichtsdampfphase dieselbe Zusammensetzung aufweist wie die flüssige Phase und das somit einen konstanten Siedepunkt aufweist.

Der Vorteil der Verwendung von azeotropen Gemischen liegt zum einen darin, dass damit die Siedetemperatur der Behandlungsflüssigkeit und damit auch die Temperatur, bei der der Formartikel behandelt wird, variiert werden kann. Zum anderen können die Löseeigenschaften der Behandlungsflüssigkeit in Bezug auf den Kunststoff, aus dem der zu behandelnde Formartikel hergestellt ist, gezielt beeinflusst werden.

Dies kann vorteilhaft sein, wenn beispielsweise ein Lösungsmittel, das aufgrund seiner Löseeigenschaften zur Behandlung eines aus einem Kunststoff hergestellten Formartikels prinzipiell geeignet ist, einen Siedepunkt aufweist, der so hoch ist, dass aufgrund eines sehr schnellen Anlösens der Oberfläche des Formartikels, d.h. einer sehr hohen Lösungsgeschwindigkeit, eine zufriedenstellende und reproduzierbare Prozesskontrolle nicht möglich ist. Wird anstelle des reinen Lösungsmittels ein azeotropes Gemisch mit niedrigerem Siedepunkt verwendet, so kann der Prozess des Anlösens und Glätten der Oberfläche verlangsamt und dadurch besser kontrolliert werden.

Dabei kann die Lösungsgeschwindigkeit zum einen dadurch verringert werden, dass allein durch die Herabsetzung der Siedetemperatur der Vorgang des Anlösens der Oberfläche des Formartikels langsamer abläuft. Zusätzlich kann durch das Verdünnen des Lösungsmittels ebenfalls eine Verringerung der Lösungsgeschwindigkeit bewirkt werden.

Die Verwendung eines azeotropen Gemisches kann ferner in den Fällen von Vorteil sein, in denen der Siedepunkt des Lösungsmittels so hoch ist, dass der Kunststoff bei dieser Temperatur zu schmelzen oder zu erweichen beginnt. Durch Verwenden eines azeotropen Gemisches, das einen niedrigeren Siedepunkt als das reine Lösungsmittel aufweist, kann dies verhindert werden.

So kann bei der Behandlung von Polypropylen (PP) mit Toluol, die Siedetemperatur des Toluols zu hoch sein, um ein gutes Ergebnis zu erreichen. Die Verwendung eines azeotropen Gemisches aus Toluol/Essigsäure mit 72 Gew.-% Toluol und 28 Gew.-% Essigsäure verringert die Temperatur der Dampfphase um ca. 10 °C und verlangsamt somit den Prozess.

Bei dem erfindungsgemäßen Verfahren ist es bevorzugt, dass der Siedepunkt der Behandlungsflüssigkeit unterhalb des Erweichungspunkts des Kunststoffs liegt, aus dem der zu behandelnde Formartikel hergestellt ist. Dadurch kann verhindert werden, dass durch Wärmeübertragung von der Dampfphase auf den Formartikel die Oberfläche des Formartikels bis zum Erweichungspunkt des Kunststoffs erwärmt wird und der Formartikel oberflächlich zu schmelzen oder erweichen beginnt. Dadurch wäre die Prozesskontrolle deutlich erschwert.

Als Erweichungspunkt wird hierbei die Temperatur angesehen, bei der der Kunststoff, aus dem der Formartikel besteht, beginnt sich allein aufgrund der Schwerkraft zu verformen.

Bei dem erfindungsgemäßen Verfahren ist vorzugsweise eine Glättung der Oberfläche des Formartikels beabsichtigt, derart, dass die Oberfläche nach der Behandlung einen Mittenrauwert Rₐ von 6 µm oder weniger, vorzugsweise von 4 µm oder weniger und besonders bevorzugt von 2 µm oder weniger aufweist, wobei die Rauwerte bestimmt werden entsprechend der Norm ISO 25178-601:2010-07 (Geometrische Produktspezifikation (GPS) - Oberflächenbeschaffenheit: Flächenhaft - Teil 601: Merkmale von berührend messenden Geräten (mit Taster)).

Die Erfinder der vorliegenden Erfindung haben herausgefunden, dass zum Zweck der Glättung der Oberfläche eines Formartikels aus additiver Fertigung eine optimale Behandlungszeit bei vorzugsweise 15 s bis 15 min liegt. Die Behandlungszeit ist die Zeit, die der zu behandelnde Formartikel der Dampfphase der Behandlungsflüssigkeit ausgesetzt wird, bis die gewünschte Glättung der Oberfläche erreicht ist, d.h. bis beispielsweise eine optisch zufriedenstellende Oberfläche oder eine Oberfläche mit einem vorgegebenen maximalen Mittenrauwert Rₐ erreicht ist.

Bei kürzeren Behandlungszeiten, d.h. Behandlungszeiten von weniger als 15 s, wird es zunehmend schwierig, den Vorgang zu kontrollieren, wodurch insbesondere die Reproduzierbarkeit verschlechtert ist. Demgegenüber treten bei längeren Behandlungszeiten, d.h. bei Behandlungszeiten von mehr als 15 min, nachteilige Effekte auf, wie beispielsweise ein übermäßiges oberflächliches Quellen des Formartikels. Zudem wird bei einer zu langen Behandlungszeit der zu behandelnde Formartikel nicht nur oberflächlich erwärmt, so dass erwärmungsbedingt Volumenänderungen und in Folge davon Verformungen und Spannungen im Formartikel auftreten können. Enthält der Formartikel Hohlräume, so können durch Erwärmen und ein Ausdehnen der in den Hohlräumen eingeschlossenen Luft zusätzliche unerwünschte Verformungen auftreten.

Um die oben genannte optimale Behandlungszeit zu erreichen, kann die Behandlungsflüssigkeit entsprechend gewählt werden. Ist beispielsweise die Behandlungszeit zu kurz, da der Siedepunkt der Behandlungsflüssigkeit so hoch ist, dass der Vorgang des Anlösens und Glättens der Oberfläche des Formartikels zu schnell abläuft, so kann ein niedriger siedendes azeotropes Gemisch verwendet werden, wodurch die Behandlungszeit verlängert und die Behandlung besser kontrollierbar und reproduzierbar wird.

Besonders bevorzugt reicht die Behandlungszeit von 20 s bis 10 min und noch weiter bevorzugt von 30 s bis 5 min.

Wird bei dem erfindungsgemäßen Verfahren im Schritt c) der Formartikel aus der Dampfphase entnommen, ist es vorteilhaft, restlicher Behandlungsflüssigkeit an der Oberfläche des Formartikels möglichst schnell zu entfernen, um die Behandlung zu stoppen. Dies beinhaltet auch das Entfernen von Behandlungsflüssigkeit, die aufgrund eines Quellens oberflächlicher Bereiche des Formartikels während des Aussetzens im Schritt b) in den Formartikel eingedrungen ist.

Das Entfernen von auf und/oder in der Oberfläche des behandelten Formartikels vorhandener restlicher Behandlungsflüssigkeit kann erreicht werden durch Verdunsten lassen, Verdunsten unter Wärmezufuhr, Verdunsten unter reduziertem Druck oder durch Abwaschen mittels einer geeigneten Reinigungsflüssigkeit.

Bei relativ flüchtigen Lösungsmitteln kann es ausreichend sein, dieses oder diese ohne zusätzliche Maßnahmen verdunsten zu lassen. Bei weniger flüchtigen Lösungsmitteln kann das Verdunsten beschleunigt werden durch Erwärmen des behandelten Formartikels und/oder durch Reduzieren des Drucks. Der Vorgang des Verdunstens kann ferner dadurch beschleunigt werden, dass der Formartikel einem Luftstrom ausgesetzt wird. Alternativ kann oberflächlich vorhandene restliche Behandlungsflüssigkeit auch abgewaschen werden, wobei vorzugsweise eine Flüssigkeit verwendet wird, die einerseits mit der Behandlungsflüssigkeit mischbar ist und andererseits den Kunststoff, aus dem der behandelte Formartikel hergestellt ist, nicht lösen oder anlösen kann. Es können auch Kombinationen der genannten Maßnahmen zum Entfernen von restlicher Behandlungsflüssigkeit angewendet werden.

Indem die Dampfphase durch Erwärmen der Behandlungsflüssigkeit bis zu deren Siedepunkt, d.h. durch Sieden der Behandlungsflüssigkeit, erzeugt wurde, wird die Temperatur der Dampfphase ungefähr dem Siedepunkt der Behandlungsflüssigkeit entsprechen. Demgegenüber wird der Formartikel vor der Behandlung in der Regel eine niedrigere Temperatur aufweisen, so dass bei dem Kontakt der Dampfphase mit dem Formartikel die dampfförmige Behandlungsflüssigkeit an der Oberfläche des Formartikels kondensieren wird. Das Ausmaß der Kondensation der Behandlungsflüssigkeit an der Oberfläche des Formartikels ist unter anderem von dem Temperaturunterschied zwischen Dampfphase und Formartikel abhängig.

Gemäß einer bevorzugten Ausführungsform des erfindungsgemäßen Verfahrens wird der zu behandelnde Formartikel vor dem Schritt des Aussetzens der erzeugten Dampfphase auf eine vorgegebene Temperatur gebracht. Dadurch kann der Temperaturunterschied zwischen Dampfphase und Formartikel vorgegeben und somit der Vorgang der Kondensation von Behandlungsflüssigkeit auf der Oberfläche des Formartikels gesteuert werden.

Wird beispielsweise ein relativ geringer Temperaturunterschied zwischen Dampfphase und Formartikel vorgegeben, wobei die Temperatur des Formartikels geringer als die Temperatur der Dampfphase ist, wird sich ein relativ feiner Flüssigkeitsfilm auf der Oberfläche des Formartikels ausbilden und wird somit eine gleichmäßigere Glättung der Oberfläche erhalten.

Gemäß einer weiteren bevorzugten Ausführungsform des erfindungsgemäßen Verfahrens wird der Formartikel auf eine Temperatur gebracht wird, die oberhalb des Siedepunkts der Behandlungsflüssigkeit und unterhalb des Erweichungspunkts des Kunststoffs liegt. Bei dieser Ausführungsform wird verhindert, dass im Schritt b) Behandlungsflüssigkeit auf der Oberfläche des Formartikels kondensiert. Vielmehr löst die dampfförmige Behandlungsflüssigkeit die Oberfläche des Formartikels an, indem sie von dieser aufgenommen wird und sich dabei auf der Oberfläche des Formartikels eine Schicht ausbildet, in der der Kunststoff in einem zumindest teilweise gelösten Zustand vorliegt. In diesem Zustand ist der Kunststoff oberflächlich erweicht, was letztendlich eine Glättung der Oberfläche bewirkt.

Der Vorteil dieser Ausführungsform liegt darin, dass ein langsameres und damit besser kontrollierbares Anlösen der Oberfläche des Formartikels möglich wird, was vor allem bei Formartikeln mit fein strukturierten Oberflächen eine schonendere Glättung ermöglicht. Zudem wird vermieden, dass kondensierende Behandlungsflüssigkeit entlang der Oberfläche des Formartikels nach unten läuft wodurch die Behandlung bzw. Glättung der Oberfläche ungleichmäßig werden könnte.

### Kurzbeschreibung der Figuren

Fig. 1 zeigt Aufnahmen einer ersten Stelle des im Bearbeitungsbeispiel 2 verwendeten PP-Formartikels, wobei Fig. 1a eine Aufnahme vor der Behandlung zeigt und Fig. 1b eine Aufnahme nach einer Behandlung mittels des erfindungsgemäßen Verfahrens zeigt.
Fig. 2 zeigt Aufnahmen einer zweiten Stelle des im Bearbeitungsbeispiel 2 verwendeten PP-Formartikels, wobei Fig. 2a eine Aufnahme vor der Behandlung zeigt und Fig. 2b eine Aufnahme nach einer Behandlung mittels des erfindungsgemäßen Verfahrens zeigt.

Nachstehend werden Bearbeitungsbeispiele beschrieben, die beispielhaft die praktische Anwendung des erfindungsgemäßen Verfahrens zur Behandlung eines Formartikels aus Kunststoff aufzeigen.

In den Bearbeitungsbeispielen wurde die erfindungsgemäße Behandlung in einem topfförmigen Behälter aus Edelstahl oder bei kleinen Formartikeln in einem Becher aus Borosilikatglas durchgeführt. Der Behälter wies einen in der Draufsicht kreisförmigen Querschnitt auf, besaß einen flachen Boden und war nach oben hin offen. Am Boden des Behälters war eine Heizeinrichtung installiert mittels der eine darüber angeordnete und nach oben offene Schale erwärmt werden kann. In die Schale wurde die Behandlungsflüssigkeit in einer Menge gefüllt, die ausreichend war, während der gesamten Behandlungsdauer in dem Behälter eine gleichbleibende Dampfphase der Behandlungsflüssigkeit zu erzeugen. Oberhalb der Heizeinrichtung und der Schale war eine Stellfläche installiert, die so angeordnet und ausgestaltet war, dass der zu behandelnde Formartikel darauf platziert werden konnte und dann vollkommen von der in dem Behälter erzeugten Dampfphase der Behandlungsflüssigkeit umgeben war. Die Stellfläche war zudem so ausgestaltet, dass sie von der Heizeinrichtung nicht direkt erwärmt wurde.

Zur Durchführung der erfindungsgemäßen Behandlung wurde zuerst mittels der Heizeinrichtung die Schale mit der Behandlungsflüssigkeit erwärmt, bis die Behandlungsflüssigkeit zu sieden begann und sich der Behälter langsam mit der Dampfphase der Behandlungsflüssigkeit füllte. Durch die verdampfende Behandlungsflüssigkeit, deren Dampf schwerer als Luft war, wurde nach und nach die Luft aus dem Behälter verdrängt und füllte sich dieser mit der Dampfphase. Der Füllstand, d.h. die Höhe, bis zu der die Dampfphase im Inneren des Behälters angestiegen war, war gut erkennbar anhand von an der Innenwand des Behälters kondensierender Behandlungsflüssigkeit.

Sobald der Behälter nahezu vollständig mit der Dampfphase der Behandlungsflüssigkeit gefüllt war, wurde der zu behandelnde Formartikel auf der Stellfläche im Inneren des Behälters platziert. Nach Ablauf der Behandlungszeit wurde der Formartikel wieder entnommen und an einem Ort mit guter Belüftung solange stehen gelassen, bis oberflächlich vorhandene Behandlungsflüssigkeit verdunstet war.

Entsprechend dem oben geschilderten Verfahren wurden die nachfolgend aufgelisteten Bearbeitungsbeispiele 1 bis 3 durchgeführt, wobei die folgenden Materialien verwendet wurden:

**Kunststoffe:**

| | |
|---|---|
| ABS: | Filament aus Acrylnitril-Butadien-Styrol-Copolymer mit der Bezeichnung "TitanX" des Herstellers Formfutura BV, HH Nijmegen, Niederlande, Farbe: schwarz, Durchmesser des Filaments 1,75 mm; Es wurde eine Düse mit einem Öffnungsdurchmesser von 0,6 mm verwendet; |
| PP: | Filament aus Polypropylen mit der Bezeichnung "Centaur PP" des Herstellers Formfutura BV, HH Nijmegen, Niederlande, Farbe: natur, Durchmesser des Filaments 1,75 mm; Es wurde eine Düse mit einem Öffnungsdurchmesser von 0,6 mm verwendet; |

**Lösungsmittel:**

| | |
|---|---|
| Methylethylketon (MEK): | Technisch mind. 97%, Bernd Kraft GmbH |
| Toluol: | Technisch mind. 97%, VWR Chemicals |
| n-Propanol: | EMPLURA®, Merck KGaA |
| Essigsäure: | 100%, technisch, VWR Chemicals |

### Bearbeitungsbeispiel 1

Ein mittels additiver Fertigung hergestellter Formartikel aus ABS mit einer Länge von ca. 5 cm, einer Breite von ca. 5 cm und einer Höhe von ca. 9 cm wurde in dem oben beschriebenen Behälter aus Borosilikatglas gemäß dem erfindungsgemäßen Verfahren behandelt, wobei als Behandlungsflüssigkeit MEK (Siedepunkt ca. 80 °C) verwendet wurde. Der Formartikel wurde vor der Behandlung auf 85 °C erwärmt. Die Behandlungszeit in der Dampfphase betrug 30 s.

### Bearbeitungsbeispiel 2

Ein mittels additiver Fertigung hergestellter Formartikel aus PP mit einer Länge von ca. 48 cm, einer Breite von ca. 8,5 cm und einer Höhe von ca. 20 cm wurde in dem oben beschriebenen Behälter aus Edelstahl gemäß dem erfindungsgemäßen Verfahren behandelt, wobei als Behandlungsflüssigkeit eine Mischung aus Toluol/Essigsäure mit 72 Gew.-% Toluol und 28 Gew.-% Essigsäure (Siedepunkt ca. 101 °C) verwendet wurde. Der Formartikel wurde vor der Behandlung nicht erwärmt und besaß Raumtemperatur. Die Behandlungszeit in der Dampfphase betrug 30 s.

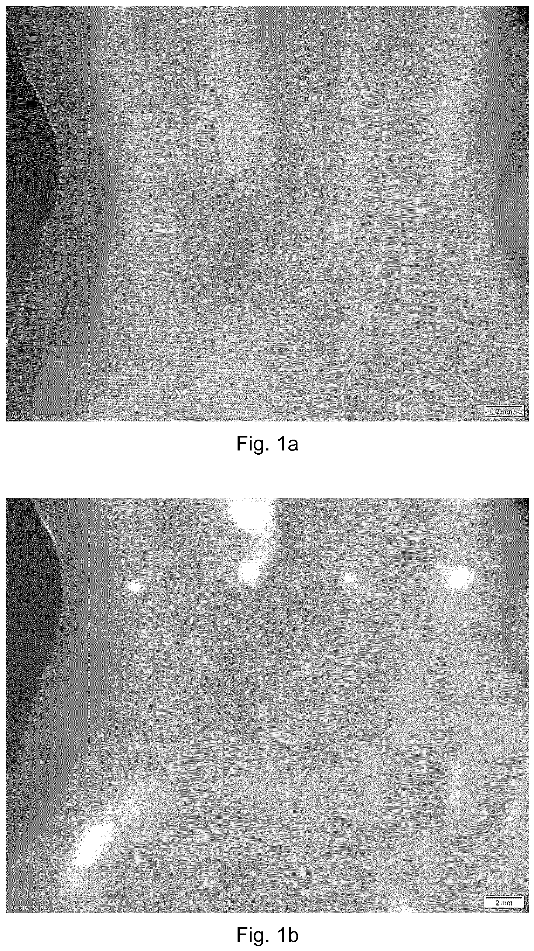

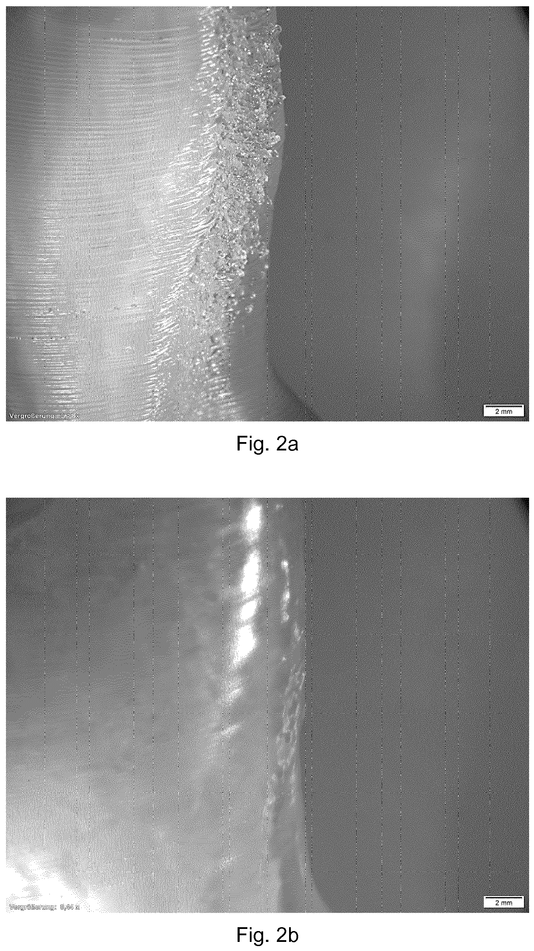

Zusätzlich wurden an zwei unterschiedlichen Stellen des Formartikels aus PP jeweils vor einer Behandlung und nach der Behandlung gemäß dem erfindungsgemäßen Verfahren fotographische Aufnahmen angefertigt, die in den Figuren 1a/1b und 2a/2b dargestellt sind. Die Aufnahmen zeigen eine deutliche Glättung der Oberfläche durch das erfindungsgemäße Verfahren, so dass die vor der Behandlung gut sichtbare Schichtstruktur nach der Behandlung kaum mehr erkennbar war.

### Bearbeitungsbeispiel 3

Zwei mittels additiver Fertigung hergestellte Formartikel aus PP mit jeweils einer Länge von ca. 48 cm, einer Breite von ca. 8,5 cm und einer Höhe von ca. 20 cm wurden in dem oben beschriebenen Behälter aus Edelstahl gemäß dem erfindungsgemäßen Verfahren behandelt, wobei als Behandlungsflüssigkeit eine Mischung aus Toluol/n-Propanol mit 51 Gew.-% Toluol und 49 Gew.-% n-Propanol (Siedepunkt ca. 93 °C) verwendet wurde. Die Formartikel wurden vor der Behandlung nicht erwärmt und besaßen Raumtemperatur. Die Behandlungszeiten in der Dampfphase betrugen 30 s bzw. 60 s.

Ein Vergleich der Ergebnisse der Bearbeitungsbeispiele 1 bis 3 ergab bei einer visuellen Begutachtung der behandelten Formartikel, dass der im Bearbeitungsbeispiel 1 behandelte Formartikel, der vor der Behandlung auf eine Temperatur oberhalb des Siedepunkts der Behandlungsflüssigkeit erwärmt wurde, einen deutlich höheren Glanz aufwies als der mit dem Bearbeitungsbeispiel 2 behandelte Formartikel, der ohne vorheriges Erwärmen behandelt wurde.

Bei einer identischen Behandlungszeit von 30 s zeigte der mit dem Bearbeitungsbeispiel 2 behandelte PP-Formartikel eine bessere Glättung als der mit dem Bearbeitungsbeispiel 3 behandelte PP-Formartikel. Wurde die Behandlungszeit im Bearbeitungsbeispiel 3 auf 60 s verlängert, so war die Glättung vergleichbar mit der im Bearbeitungsbeispiel 2 erhaltenen. Dennoch erschien der Glanz des mit dem Bearbeitungsbeispiel 3 behandelten PP-Formartikels etwas höher.

### Bearbeitungsbeispiel 4

In diesem Beispiel wurde das Ergebnis der Glättung mittels des erfindungsgemäßen Verfahrens mit dem Ergebnis bei Anwendung des alternativen Verfahren zum Glätten der Oberfläche mittels Verschleifen der Unebenheiten verglichen.

Dazu wurden auf identische Weise zwei Formartikel aus Polypropylen (PP) mittels additiver Fertigung (3D-Druck) hergestellt. Einer der beiden Formartikel wurde auf eine im Stand der Technik übliche Weise mittels Verschleifen der oberflächlichen Unebenheiten geglättet. Der andere der beiden Formartikel wurde gemäß dem oben beschriebenen erfindungsgemäßen Verfahren behandelt.

Bei den verwendeten Formartikeln wurden vor der Behandlung und nach dem Glätten gemäß dem erfindungsgemäßen Verfahren bzw. nach dem Glätten durch Verschleifen an verschiedenen Punkten die Rauheit der Oberfläche mit einem Tastschnittmessgerät gemessen (Messverfahren nach ISO 25178-601:2010-07, verwendetes Gerät: MarSurf M300, Hersteller: Fa. Mahr GmbH). In Tabelle 1 sind die gemessenen Werte aufgezeigt.

**Tabelle 1**

| | Glätten gemäß Erfindung | | Glätten durch Verschleifen | | unbehandelter Formartikel | |
|---|---|---|---|---|---|---|
| | Ra /µm | Rz / µm | Ra /µm | Rz / µm | Ra /µm | Rz / µm |
| Punkt 1 | 1,295 | 6,061 | 7,488 | 41,05 | 12,44 | 58,16 |
| Punkt 2 | 1,167 | 5,823 | 5,778 | 30,48 | 10,58 | 54,89 |
| Punkt 3 | 1,609 | 7,204 | 5,847 | 34,12 | 14,03 | 71,59 |
| Punkt 4 | 1,6 | 7,592 | 5,908 | 30,62 | 12,11 | 60,52 |
| Punkt 5 | 1,263 | 5,845 | 7,894 | 46,34 | 12,96 | 62,52 |
| Punkt 6 | 1,083 | 5,845 | 5,153 | 34,18 | | |
| Punkt 7 | 1,456 | 7,161 | 5,153 | 31,8 | | |
| Punkt 8 | 1,489 | 7,65 | 4,83 | 31,83 | | |
| 50% Quantil | 1,4 | 6,6 | 5,8 | 33,0 | 12,4 | 60,5 |
| Mittelwert | 1,4 | 6,6 | 6,0 | 35,1 | 12,4 | 61,5 |

Die Ergebnisse zeigen deutlich, dass mit dem erfindungsgemäßen Verfahren zur Behandlung eines Formartikels aus Kunststoff eine deutlich glattere Oberfläche erreicht werden konnte gegenüber einer glättenden Behandlung durch Verschleifen der durch die Herstellung bedingten Unebenheiten. Zudem war die dazu notwendige Behandlungszeit deutlich kürzer, und war das erfindungsgemäße Verfahren somit für den industriellen Einsatz und der Herstellung größerer Stückzahlen besser geeignet.

## Patentansprüche

1. Verfahren zur Behandlung eines Formartikels aus Kunststoff mit den Schritten
a) Erzeugen einer Dampfphase durch Erwärmen einer Behandlungsflüssigkeit bis zu deren Siedepunkt, wobei die Behandlungsflüssigkeit mindestens ein Lösungsmittel umfasst, das in der Lage ist, den Kunststoff zu lösen oder anzulösen,
b) Aussetzen des zu behandelnden Formartikels der im Schritt a) erzeugten Dampfphase für eine vorgegebene Behandlungszeit und
c) Entfernen des Formartikels aus der Dampfphase und Entfernen von auf der Oberfläche des behandelten Formartikels vorhandener restlicher Behandlungsflüssigkeit.

2. Verfahren nach Anspruch 1, wobei das Lösungsmittel ausgewählt ist aus organischen Lösungsmitteln, wie aliphatischen oder aromatischen Kohlenwasserstoffen, Ketonen und Estern, die substituiert oder nicht substituiert sein können, sowie anorganischen und organischen Säuren und deren wässrige Lösungen.

3. Verfahren nach Anspruch 2, wobei der Kunststoff ausgewählt ist aus thermoplastischen Kunststoffen, wie Acrylnitril-Butadien-Styrol-Copolymer (ABS), Polypropylen (PP), Polycarbonat (PC), Polylactid (PLA), Polyamid (PA), Polyethylenterephthalat (PET) und Polystyrol (PS).

4. Verfahren nach einem der vorhergehenden Ansprüche, wobei die Behandlungsflüssigkeit mindestens ein weiteres Lösungsmittel und/oder eine andere Flüssigkeit umfasst und die Behandlungsflüssigkeit ein azeotropes Gemisch bildet.

5. Verfahren nach einem der vorhergehenden Ansprüche, wobei der Siedepunkt der Behandlungsflüssigkeit unterhalb des Erweichungspunkts des Kunststoffs liegt.

6. Verfahren nach einem der vorhergehenden Ansprüche, wobei die Behandlung des Formartikels eine Glättung der Oberfläche des Formartikels bewirkt so dass die Oberfläche nach der Behandlung einen Mittenrauwert Rₐ von 6 µm oder weniger, vorzugsweise von 4 µm oder weniger und besonders bevorzugt von 2 µm oder weniger aufweist.

7. Verfahren nach einem der vorhergehenden Ansprüche, wobei die Behandlungsflüssigkeit so gewählt wird, dass die Behandlungszeit von 15 s bis 15 min, vorzugsweise von 20 s bis 10 min und weiter bevorzugt von 30 s bis 5 min reicht.

8. Verfahren nach einem der vorhergehenden Ansprüche, wobei das Entfernen von auf der Oberfläche des behandelten Formartikels vorhandener restlicher Behandlungsflüssigkeit erreicht wird durch Verdunsten lassen, Verdunsten unter Wärmezufuhr, Verdunsten unter reduziertem Druck oder durch Abwaschen mittels einer geeigneten Reinigungsflüssigkeit.

9. Verfahren nach einem der vorhergehenden Ansprüche, wobei der zu behandelnde Formartikel vor dem Schritt des Aussetzens der erzeugten Dampfphase auf eine vorgegebene Temperatur gebracht wird.

10. Verfahren nach Anspruch 9, wobei der Formartikel auf eine Temperatur gebracht wird, die oberhalb des Siedepunkts der Behandlungsflüssigkeit und unterhalb des Erweichungspunkts des Kunststoffs liegt.
